# EUROPÄISCHE PATENTSCHRIFT

(11) **EP 0 884 091 B1**
(45) Veröffentlichungstag und Bekanntmachung des Hinweises auf die Patenterteilung: **08.10.2003**
(21) Anmeldenummer: 98108166.4
(22) Anmeldetag: 05.05.1998
(51) Int. Cl.: B01D 53/26

(54) **Warmregenerierter Adsorptionstrockner mit Wärmerückgewinnung**
Heat regenerated adsorber-dryer with heat recovery
Sécheur adsorbant régénéré par de la chaleur avec récupération de chaleur

(30) Priorität: 14.05.1997 DE 19720104
(43) Veröffentlichungstag der Anmeldung: 16.12.1998
(73) Patentinhaber: Zander Aufbereitungstechnik GmbH & Co.KG, 45219 Essen (DE)
(72) Erfinder: Priess, Günter Ing., 47807 Krefeld (DE)
(74) Vertreter: Cohausz & Florack

(56) Entgegenhaltungen:
- DE-A- 3 915 673

## Beschreibung

Die Erfindung betrifft einen warmregenerierten Adsorptionstrockner für gasförmige Medien mit einer oder mehreren parallelliegenden Adsorptionskammern, die insbesondere im Wechsel von Adsorption auf Regeneration umschaltbar sind, sowie mit einem Gebläse, das über die zu regenerierende(n) Adsorptionskammer(n) in einem ersten Abschnitt der Regenerationsphase ein frisches, in einem Erhitzer erwärmtes gasförmiges Medium und in einem zweiten Abschnitt der Regenerationsphase ein frisches kühles gasförmiges Medium ansaugt.

Adsorptionstrockner dieser Art sind bekannt (DE 39 15 673 C2). Bei diesem bekannten Adsorptionstrockner ist vorgesehen, daß im ersten Abschnitt der Regenerationsphase der volle Volumenstrom des von seiner niedrigen Eingangstemperatur zu erwärmenden frischen gasförmigen Mediums auf die gewünschte höhere Temperatur durch den Erhitzer erwärmt wird. Nach Passieren der Adsorptionskammer wird dieser Volumenstrom vollständig in die Atmosphäre abgeleitet.

Der Erfindung liegt die Aufgabe zugrunde, einen warmregenerierten Adsorptionstrockner für gasförmige Medien zu schaffen, der mit einem vergleichsweise geringen Energieverbrauch auskommt.

Diese Aufgabe wird erfindungsgemäß dadurch gelöst, daß von der Druckseite des Gebläses ein Bypass zu dem Erhitzer führt, in dem der über den Bypass abgezweigte Teilstrom des erwärmten gasförmigen Mediums mit dem im Erhitzer zu erwärmenden frischen gasförmigen Medium vermischt wird.

Der erfindungsgemäße Adsorptionstrockner arbeitet mit Wärmerückgewinnung. Durch die Beimischung eines Teils des erwärmten und schon im ersten Abschnitt der Regenerationsphase eingesetzen gasförmigen Mediums wird die Temperatur des dem Erhitzer zugeführten frischen gasförmigen Mediums erhöht, so daß dem Erhitzer nur so viel Energie noch zugeführt werden muß, wie zum Erreichen der gewünschten Endtemperatur des dem Adsorber zuzuführenden gasförmigen Mediums gewünscht wird. Diese dadurch schon günstige Energiebilanz wird weiter noch dadurch verbessert, daß eine weitere Temperaturerhöhung des aus der zu regenerierenden Adsorptionskammer kommenden Mediums im Gebläse durch dessen Verdichtungswärme stattfindet. Bei den bisherigen Adsorptionstrocknern ging der Wärmeinhalt des die zu regenerierende Adsorptionskammer verlassenden gasförmigen Mediums, wegen seiner vollständigen Ableitung in die Atmosphäre ganz verloren.

Um die Wärmebilanz weiter zu verbessern, ohne daß ein zu großer Teilstrom dem frischen gasförmigen Medium beigemischt zu werden braucht, ist nach einer Ausgestaltung der Erfindung vorgesehen, daß das Gebläse und der Bypass nach außen wärmeisoliert sind.

Im folgenden wird die Erfindung anhand eines Schemabildes eines Adsorptionstrockners näher erläutert.

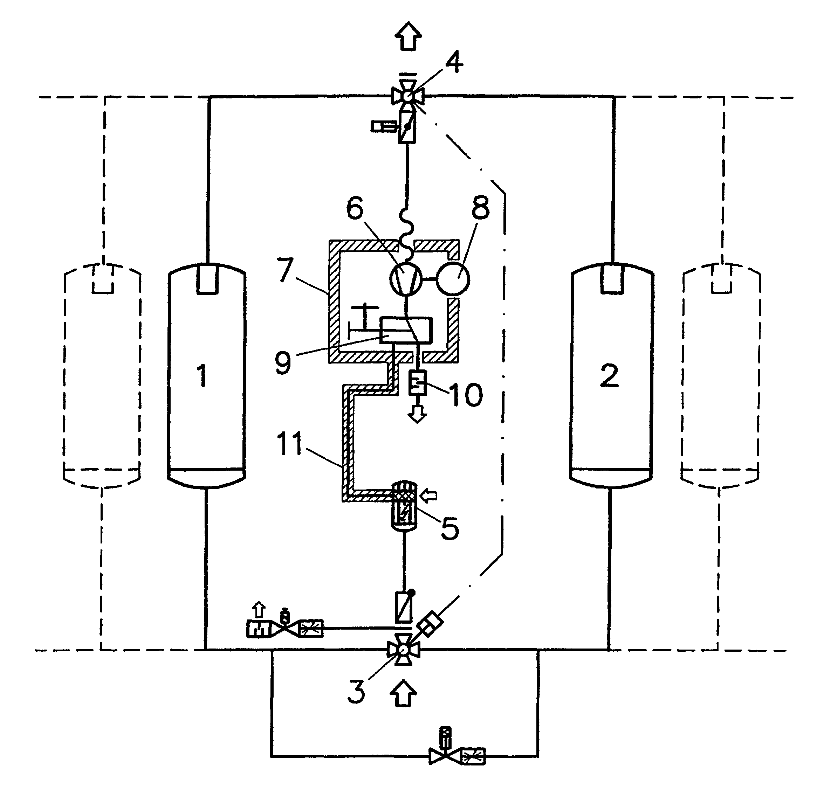

Der in dem Bild dargestellte Adsorptionstrockner für gasförmige Medien, insbesondere Luft, weist zwei parallelliegende Adsorptionskammern 1,2 auf, die im Wechsel betrieben werden, so daß zu jeder Zeit eine Adsorptionskammer zur Entfeuchtung des gasförmigen Mediums dient, während die andere regeneriert wird. Die Erfindung ist jedoch nicht auf diesen Wechselbetrieb beschränkt, sondern erlaubt auch den Betrieb mit einer einzigen Adsorptionskammer oder mit mehreren Adsorptionskammern, die gleichphasig betrieben werden. In der Zeichnung ist gestrichelt dargestellt, daß den im Wechsel betriebenen Adsorptionskammern 1,2 jeweils eine oder mehrere Adsorptionskammern parallelgeschaltet sind, die mit der jeweiligen Adsorptionskammer 1,2 gleichphasig betrieben werden.

Beim Ausführungsbeispiel erfolgt der Wechsel von Adsorption auf Regeneration durch Umschaltung zweier Vierwegeventile 3,4.

Um in der Regenerationsphase das Adsorptionsmittel in der einen oder anderen Kammer 1,2 mit einem erwärmten gasförmigen Medium und einem gekühlten gasförmigen Medium behandeln zu können, sind an den Vierwegeventilen 3,4 ein Erhitzer 5 und ein Gebläse 6 angeschlossen. Das mit seiner Saugseite am Vierwegeventil 4 angeschlossene Gebläse 6 ist in einem wärmeisolierten Gehäuse 7 untergebracht. Sein Antriebsmotor 8 liegt außerhalb des wärmeisolierten Gehäuses 7, kann aber auch innerhalb des Gehäuses 7 liegen. An der Druckseite des Gebläses6 ist ein Bypassventil 9 angeschlossen, dessen Hauptausgang über einen Schalldämpfer 10 in die Atmosphäre führt, während sein Nebenausgang über einen wärmeisolierten Bypass 11 zum Eingang des Erhitzers 5 führt. An diesem Eingang findet eine Vermischung mit einem von dem Gebläse 6 über die Adsorptionskammer 1,2 angesaugten frischen kühlen gasförmigen Medium statt. Die sich dabei einstellende Temperatur liegt oberhalb der Temperatur des angesaugten frischen Mediums. Deshalb braucht dem der Adsorptionskammer 1,2 im ersten Abschnitt der Regenerationsphase zuzuführenden gasförmigen Medium weniger Wärmeenergie zugeführt zu werden, als es bei herkömmlichen Adsorptionstrocknern der Fall war. In dem zweiten Abschnitt der Regenerationsphase, in der nur ein kühles gasförmiges Medium benötigt wird, bleibt der Erhitzer 5 ausgeschaltet und der Bypass 11 gesperrt, so daß nur ein frisches gasförmiges Medium angesaugt wird.

Am Ende dieses zweiten Abschnittes der Regeneration wird durch Umschalten der Vierwegeventile 3,4 zum Beispiel bei der Adsorptionskammer 1 von Adsorption auf Regeneration und bei der Adsorptionskammer 2 von Regeneration auf Adsorption umgeschaltet.

## Patentansprüche

1. Warmregenerierter Adsorptionstrockner für gasförmige Medien mit einer oder mehreren parallelliegenden Adsorptionskammern (1,2), die insbesondere im Wechsel von Adsorption auf Regeneration umschaltbar sind, sowie mit einem Gebläse (6), das über die zu regenerierende(n) Adsorptionskammer(n) (1,2) in einem ersten Abschnitt der Regenerationsphase ein frisches in einem Erhitzer (5) erwärmtes gasförmiges Medium und in einem zweiten Abschnitt der Regenerationsphase ein frisches kühles gasförmiges Medium ansaugt,
**dadurch gekennzeichnet, daß** von der Druckseite des Gebläses (6) ein Bypass (11) zum Erhitzer (5) führt, in dem der über den Bypass (11) abgezweigte Teilstrom des erwärmten gasförmigen Mediums mit dem im Erhitzer (5) zu erwärmenden frischen gasförmigen Medium vermischt wird.

2. Adsorptionstrockner nach Anspruch 1,
**dadurch gekennzeichnet, daß** das Gebläse (6) und der Bypass (11) nach außen wärmeisoliert sind.

## Claims

1. A thermo-regenerated adsorption dryer for gaseous media with one or several adsorption chambers (1, 2) arranged in parallel, which, in particular, can be switched alternately from adsorption to regeneration, and a blower (6) which draws in a fresh gaseous medium heated in a heater (5) in a first stage of the regeneration phase via the adsorption chamber(s) (1, 2) to be regenerated and a fresh cool gaseous medium in a second stage of the regeneration phase, **characterised in that** a bypass (11) runs from the pressure side of the blower (6) to the heater (5), in which the partial current of the heated gaseous medium diverted by means of the bypass (11) is mixed with the fresh gaseous medium to be heated in the heater (5).

2. The adsorption dryer according to claim 1, **characterised in that** the blower (6) and the bypass (11) are heat-insulated towards the outside.

## Revendications

1. Sécheur par adsorption régénéré à chaud, destiné à des fluides gazeux et équipé d'une ou de plusieurs chambres d'adsorption (1,2) installées en parallèle et notamment commutables alternativement de l'adsorption à la régénération, par ailleurs d'une soufflante (6) aspirant, par l'intermédiaire de la (des) chambre(s) d'adsorption (1,2) devant être régénérée(s), dans une première étape de la phase de régénération un fluide gazeux frais réchauffé dans un réchauffeur (5) et dans une deuxième étape de la phase de régénération un fluide gazeux frais et froid,
**caractérisé en ce qu**'une dérivation (11) est raccordée au réchauffeur (5) depuis le côté refoulement de la soufflante (6), réchauffeur dans lequel le courant partiel du fluide gazeux réchauffé et dérivé via la dérivation (11) est mélangé au fluide gazeux frais à réchauffer dans le réchauffeur (5).

2. Sécheur par adsorption conformément à la revendication 1,
**caractérisé en ce que** la soufflante (6) et la dérivation (11) sont calorifugées par rapport à l'extérieur.
